(19) Europäisches Patentamt
European Patent Office
Office européen des brevets

(11) **EP 3 173 928 B1**

(12) **EUROPÄISCHE PATENTSCHRIFT**

(45) Veröffentlichungstag und Bekanntmachung des Hinweises auf die Patenterteilung:
**05.07.2023 Patentblatt 2023/27**

(21) Anmeldenummer: **16195272.6**

(22) Anmeldetag: **24.10.2016**

(51) Internationale Patentklassifikation (IPC):
**G06F 11/00** (2006.01)  **G06F 11/26** (2006.01)
**G05B 23/02** (2006.01)

(52) Gemeinsame Patentklassifikation (CPC):
**G06F 11/008; G05B 23/0278; G06F 11/261**

(54) **VERFAHREN UND VORRICHTUNG ZUM ÜBERPRÜFEN EINES KOMPONENTENFEHLERBAUMS**

METHOD AND DEVICE FOR CHECKING A COMPONENT ERROR TREE

PROCÉDÉ ET DISPOSITIF DE CONTRÔLE D'UN ARBRE DE DÉFAILLANCES DE COMPOSANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2015 DE 102015223579**

(43) Veröffentlichungstag der Anmeldung:
**31.05.2017 Patentblatt 2017/22**

(73) Patentinhaber: **Siemens Aktiengesellschaft 80333 München (DE)**

(72) Erfinder:
• **Höfig, Kai 80797 München (DE)**
• **Zeller, Marc 81243 München (DE)**

(74) Vertreter: **Siemens Patent Attorneys Postfach 22 16 34 80506 München (DE)**

(56) Entgegenhaltungen:
**DE-A1-102007 042 752    US-A- 5 561 762**

• **LEE W S ET AL: "Fault Tree Analysis, Methods, and Applications ? A Review", IEEE TRANSACTIONS ON RELIABILITY, IEEE SERVICE CENTER, PISCATAWAY, NJ, US, Bd. R-23, Nr. 3, 1. August 1985 (1985-08-01), Seiten 194-203, XP011295363, ISSN: 0018-9529**
• **NANCY G LEVESON: "Software safety: why, what, and how", ACM COMPUTING SURVEYS, ACM, NEW YORK, NY, US, US, Bd. 18, Nr. 2, 1. Juni 1986 (1986-06-01), Seiten 125-163, XP058288967, ISSN: 0360-0300, DOI: 10.1145/7474.7528**
• **DURGA RAO K ET AL: "Dynamic fault tree analysis using Monte Carlo simulation in probabilistic safety assessment", RELIABILITY ENGINEERING AND SYSTEM SAFETY, ELSEVIER APPLIED SCIENCE, GB, Bd. 94, Nr. 4, 1. April 2009 (2009-04-01), Seiten 872-883, XP025924002, ISSN: 0951-8320, DOI: 10.1016/J.RESS.2008.09.007 [gefunden am 2008-10-11]**

EP 3 173 928 B1

**Beschreibung**

Die Erfindung bezieht sich auf ein Verfahren und eine Vorrichtung zum Überprüfen eines Komponentenfehlerbaums.

In den letzten Jahren war zu beobachten, dass sicherheitsrelevante Softwaresysteme auf den Anwendungsgebieten von eingebetteten Systemen (engl. embedded systems), beispielsweise auf dem Gebiet der Luftfahrt oder der Medizintechnik, immer wichtiger wurden. Mit der zusätzlich steigenden Komplexität der Systeme entwickelte sich ein Bedarf, die Sicherheit und die Qualität dieser Softwaresysteme zu bewerten. Dies steht jedoch im Widerspruch dazu, die Entwicklungskosten und Entwicklungszeiten zu reduzieren.

Dennoch ist die Entwicklung und Bewertung von Systemen oder Systemarchitekturen hinsichtlich ihrer Sicherheit wichtig bei der Entwicklung von sicherheitskritischen Systemen. Aus diesem Grund zielt die Systembewertung darauf ab, Fehler oder Unzulänglichkeiten in einer Systemarchitektur hinsichtlich der Systemsicherheit aufzudecken. Je früher solche Fehler entdeckt werden, desto geringer sind die Kosten während des Entwicklungsprozesses für deren Beseitigung.

Typischerweise werden solche Sicherheitsbewertungen oder Analaysen von Systemen oder Systemarchitekturen mit einer Bottom-up-Sicherheitsanalyse, wie beispielsweise einer Fehlermöglichkeits- und Fehlereinflussanalyse (engl. Failure Mode and Effect Analysis, FMEA), oder einer Top-down-Sicherheitsanalyse, wie beispielsweise einer Fehlerbaumanalyse (engl. Fault Tree Analysis, FTA), durchgeführt.

Bei der Fehlerbaumanalyse kommen insbesondere Komponentenfehlerbäume zum Einsatz, da diese hierfür einen modellbasierten und einen komponentenbasierten Ansatz bieten. Es besteht jedoch ein Bedarf daran, die Qualität der Fehlerbaumanalyse, genauer gesagt des Komponentenfehlerbaumes der Fehlerbaumanalyse, zu bewerten. Ein Nachteil besteht darin, dass diese Bewertung relativ aufwendig ist.

Die Druckschrift "Fault Tree Analysis, Methods, and Applications - A Review von W. S. Lee et. al.", bewertet und klassifiziert unterschiedliche Fehlerbaumanalyse-Verfahren.

Die Druckschrift "Software safety: why, what, and how" von Nancy G. Leveson offenbart unterschiedliche Sicherheitsaspekte und deren Probleme.

Die Druckschrift DE 10 2007 042752 A1 offenbart ein Verfahren zum Analysieren von technischen Systemen.

Die Druckschrift US 5 561 762 A offenbart ein Verfahren zum Auswählen und Reagieren auf einen schädlichen Fehler in einer rekonfigurierbaren elektronischen Vorrichtung.

Die Druckschrift "Dynamic fault tree analysis using Monte Carlo simulation in probabilistic safety assessment" von K. Durga Rao et. al. offenbart eine dynamische Fehlerbaumanalyse.

Die Aufgabe der vorliegenden Erfindung ist es, ein Verfahren und eine Vorrichtung zum Überprüfen eines Komponentenfehlerbaumes bereitzustellen, das mit einem geringen Aufwand durchführbar ist.

Die Aufgabe wird durch die in den unabhängigen Ansprüchen angegebenen Merkmale gelöst. In den Unteransprüchen sind vorteilhafte Weiterbildungen der Erfindung dargestellt.

Gemäß einem ersten Aspekt betrifft die Erfindung ein Verfahren zum rechnergestützten Überprüfen eines Komponentenfehlerbaumes für ein technisches System, bei dem ein Prozessor die folgenden Verfahrensschritte ausführt:

Das Verfahren umfasst einen Verfahrensschritt zum Ausführen einer Fehlereffektsimulation für das technische System unter Verwendung des Komponentenfehlerbaumes, wobei der Komponentenfehlerbaum Fehlerzustände für Komponenten des technischen Systems umfasst, die durch vorgegebene Störungen an den Komponenten erzeugt werden. Dabei sind die vorgegebenen Störungen den Fehlerzuständen zugeordnet. Zusätzlich umfasst das Verfahren einen Verfahrensschritt zum Stimulieren der Fehlereffektsimulation mit den vorgegebenen Störungen, wobei die vorgegebenen Störungen als Fehlersignale an die Komponenten übertragen werden. Zusätzlich umfasst das Verfahren einen Verfahrensschritt zum Erfassen von Stimulationsfehlern, die durch das Stimulieren der Fehlereffektsimulation erzeugt werden. Zusätzlich umfasst das Verfahren einen Verfahrensschritt zum Überprüfen des Komponentenfehlerbaumes durch ein Vergleichen der Stimulationsfehler mit den Fehlerzuständen, wobei ein erstes Steuersignal bereitgestellt wird, das die Korrektheit des Komponentenfehlerbaumes angibt, wenn die Stimulationsfehler mit den Fehlerzuständen im Wesentlichen übereinstimmen.

Unter einer vorgegebenen Störung können im Zusammenhang mit dieser Patentanmeldung beispielsweise Datentypfehler, unvollständige Daten, Leitungsbrüche oder Ausfälle von Komponenten oder Komponentenelementen etc. verstanden werden. Dabei ist die vorgegebene Störung genau definiert, beispielsweise eine Übertragung einer Gleitkommazahl anstelle eines booleschen Wertes oder ein negativer Signalverlauf anstelle eines positiven Signalverlaufs. Ein Fehlerzustand einer Komponente, die durch einen Komponentenfehlerteilbaum eines Komponentenfehlerbaumes beschrieben wird, ist insbesondere einer vorgegebenen Störung zugeordnet. Damit lässt sich dem Komponentenfehlerbaum entnehmen, welche vorgegebene Störung für welche Komponente zu welchem Fehlerzustand führt.

Unter einem Stimulationsfehler kann im Zusammenhang mit dieser Patentanmeldung ein Fehler verstanden werden, der durch ein Fehlersignal erzeugt wurde, der an die Fehlereffektsimulation übertragen wurde. Dieses Übertragen wird auch als Injizieren eines Fehlersignals bezeichnet. Dieses Fehlersignal wird vorzugsweise anhand einer vorgegebenen Störung einer Komponente des Komponentenfehlerbaumes modelliert. Das Fehlersignal sollte vorzugsweise einen Stimulationsfehler erzeugen, wobei der Stimulationsfehler dem Fehlerzustand der Komponente des Komponentenfehlerbaums entspricht, der durch die vorgegebene Störung erzeugt wird.

Unter einem technischen System kann im Zusammenhang mit dieser Patentanmeldung beispielsweise ein Herzschrittmacher, ein Temperaturmessgerät einer Kraftwerksanlage oder ein Elektromotor einer automatischen Sicherheitstür verstanden werden.

Unter einem Komponentenfehlerteilbaum kann im Zusammenhang mit dieser Patentanmeldung ein Teil des Komponentenfehlerbaumes verstanden werden. Wird also nur eine einzelne Komponente oder eine Auswahl von Komponenten des technischen Systems betrachtet, kann man von einer Komponente, einem Teilbereich oder einem Komponentenfehlerteilbaum sprechen.

Eine "im Wesentlichen Übereinstimmung" zwischen Stimulationsfehlern und Fehlerzuständen liegt beispielsweise dann vor, wenn die Stimulationsfehler jeweils inhaltlich mit den ihnen entsprechenden Fehlerzuständen übereinstimmen.

Das Überprüfen des Komponentenfehlerbaumes wird vorzugsweise vollautomatisch oder semiautomatisch durchgeführt. Unter einem semiautomatischen Überprüfen ist dabei ein schrittweises Überprüfen von Komponentenfehlerteilbäumen für einzelne Komponenten des Fehlerbaumes oder für einzelne Teilbereiche des Komponentenfehlerbaumes zu verstehen.

Unter Überprüfen des Komponentenfehlerbaumes wird in Zusammenhang dieser Patentanmeldung insbesondere auch ein Überprüfen von einzelnen Komponenten verstanden. Insbesondere können eine einzelne Komponente und deren zugehöriger Komponentenfehlerteilbaum überprüft werden. Dabei ist es auch möglich, ausgewählte Fehlerzustände mit den zugehörigen vorgegebenen Störungen zu überprüfen. Beispielsweise kann in einem Extremfall eine Überprüfung eines einzigen Fehlerzustandes einer Komponente des Fehlerbaumes mit einer einzigen zugehörigen vorgegebenen Störung durchgeführt werden.

Der Komponentenfehlerbaum für das technische System wird anhand von einer Spezifikation erstellt, wobei der Komponentenfehlerbaum Fehlerzustände aufweist, die vorzugsweise jeweils einer Komponente des technischen Systems zugeordnet sind. Die Fehlerzustände werden vorzugsweise durch genau definierte und fest zugeordnete, vorgegebene Störungen erzeugt.

Das offenbarte Verfahren erlaubt es, einen Komponentenfehlerbaum eines technischen Systems schnell und vollständig zu prüfen. Dies ist insbesondere für komplexe technische Systeme vorteilhaft, deren Sicherheit auch für vorgegebene Störungen nachgewiesen werden muss.

Bei einer ersten Ausführungsform des Verfahrens ist das technische System ein Prüfling.

Bei weiteren Ausführungsformen des Verfahrens ist das technische System oder der Prüfling ein virtueller Prototyp.

Bei weiteren Ausführungsformen des Verfahrens wird ein Teilbereich des Komponentenfehlerbaumes ermittelt. Danach wird das Überprüfen des Komponentenfehlerbaumes nur für die Komponenten durchgeführt, die in den Teilbereich fallen.

Mit anderen Worten wird ein Komponentenfehlerteilbaum des Komponentenfehlerbaumes ausgewählt. Dabei werden durch den Teilbereich ausgewählte Komponenten festgelegt, wobei die ausgewählten Komponenten die Komponenten des Teilbereichs des Komponentenfehlerbaumes umfassen. Zusätzlich werden nur die vorgegeben Störungen als Fehlersignale festgelegt, deren zugeordnete Komponenten in den Teilbereich fallen. Es wird dann nur noch der Komponentenfehlerteilbaum oder auch Teilbereich des Komponentenfehlerbaumes überprüft. Der Teilbereich gilt dann als korrekt, wenn die Stimulationsfehler und die Fehlerzustände des Teilbereichs im Wesentlichen übereinstimmen.

Hierdurch lassen sich Teilbereiche oder auch nur einzelne Komponenten eines technischen Systems, die in einem Komponentenfehlerbaum dargestellt sind, auf einfach Weise überprüfen.

Bei weiteren Ausführungsformen des Verfahrens ist der Komponentenfehlerbaum als boolescher Baum, als binärer Entscheidungsbaum oder als gerichteter, azyklischer Graph implementiert.

Durch die unterschiedlichen Implementierungsvarianten kann ein Techniker den Ansatz verfolgen, der auf einer bestimmten Hardware- und/oder Softwareplattform am besten seine Anforderungen, beispielsweise Laufzeit oder Kompilierungszeit, erfüllt.

Bei weiteren Ausführungsformen des Verfahrens umfassen die Komponenten Komponentenelemente in Form von Software und/oder Hardware und/oder analogen Elementen, wobei die analogen Elemente insbesondere mechanische oder hydraulische Elemente sind.

Dabei kann eine Komponente eine oder mehrere Komponentenelemente umfassen. Hierdurch lassen sich beliebig komplexe Komponenten oder Komponentenfehlerteilbäume erstellen und überprüfen.

Bei weiteren Ausführungsformen des Verfahrens werden die Stimulationsfehler mittels Erfassungseinrichtungen an Datenausgängen der Komponenten erfasst.

Über die Datenausgänge, oder einfach nur Ausgänge der Komponente genannt, können besonders einfach die Stimulationsfehler erfasst werden.

Bei weiteren Ausführungsformen des Verfahrens erfolgt das Stimulieren mit den Fehlersignalen über Schnittstellen und/oder Dateneingängen der Komponenten des technischen Systems.

Über die Dateneingänge, oder einfach nur Eingänge der Komponente genannt, können besonders einfach die Fehlersignale übertragen werden.

Bei weiteren Ausführungsformen des Verfahrens wird das erste Steuersignal bereitgestellt, wenn die vorgegebenen Störungen genau die Stimulationsfehler erzeugen, die den Fehlerzuständen entsprechen, die den vorgegebenen Störungen zugeordnet sind und die Stimulationsfehler mit den Fehlerzuständen im Wesentlichen übereinstimmen.

Damit wird eine sehr genaue Überprüfung des Komponentenfehlerbaumes erreicht. Mit anderen Worten wird der Komponentenfehlerbaum nur dann als korrekt angesehen, wenn die Fehlersignale nur die Stimulationsfehler erzeugen, die aufgrund der Fehlersignale oder der vorgegebenen Störungen erwartet wurden. Werden beispielsweise mehr Stimulationsfehler erzeugt, insbesondere durch ein Fehlersignal, das neben dem erwarteten Stimulationsfehler noch einen weiteren unerwarteten Stimulationsfehler erzeugt, wird der Komponentenfehlerbaum als inkorrekt angesehen und ein zweites Steuersignal bereitgestellt.

Bei weiteren Ausführungsformen des Verfahrens wird ein zweites Steuersignal bei einer fehlgeschlagenen Überprüfung des Komponentenfehlerbaumes bereitgestellt.

Dies hat insbesondere den Vorteil, dass bei einer fehlgeschlagenen Überprüfung, also einem potentiell inkorrekten Komponentenfehlerbaum, weitere Analysen des technischen Systems ausgeführt werden können.

Gemäß einem weiteren Aspekt betrifft die Erfindung eine Vorrichtung zum rechnergestützten Überprüfen eines Komponentenfehlerbaumes eines technischen Systems. Die Vorrichtung umfasst einen Prozessor, eine Ausführungseinheit, eine Stimulationseinheit, eine Erfassungseinheit, eine Überprüfungseinheit und eine Bereitstellungseinheit. Die Ausführungseinheit führt eine Fehlereffektsimulation für das technische System unter Verwendung des Komponentenfehlerbaumes aus, wobei der Komponentenfehlerbaum Fehlerzustände für Komponenten des technischen Systems umfasst, die durch vorgegebene Störungen an den Komponenten erzeugt werden. Die vorgegebenen Störungen sind den Fehlerzuständen zugeordnet. Die Stimulationseinheit stimuliert die Fehlereffektsimulation mit den vorgegebenen Störungen, wobei die vorgegebenen Störungen als Fehlersignale an die Komponenten übertragen werden. Die Erfassungseinheit erfasst Stimulationsfehler, die durch das Stimulieren der Fehlereffektsimulation erzeugt werden. Die Überprüfungseinheit überprüft den Komponentenfehlerbaum durch ein Vergleichen der Stimulationsfehler mit den Fehlerzuständen. Die Bereitstellungseinheit stellt ein erstes Steuersignal bereit, das die Korrektheit des Komponentenfehlerbaumes angibt, wenn die Stimulationsfehler mit den Fehlerzuständen im Wesentlichen übereinstimmen.

Bei einer ersten Ausführungsform der Vorrichtung ist das technische System ein Prüfling.

Bei weiteren Ausführungsformen der Vorrichtung ist das technische System oder der Prüfling ein virtueller Prototyp.

Gemäß einem weiteren Aspekt betrifft die Erfindung ein System zum rechnergestützten Überprüfen eines Komponentenfehlerbaumes eines technischen Systems. Das System weist eine erfindungsgemäße Vorrichtung und einen Prüfstand für das technische System auf, wobei der Prüfstand mit der Vorrichtung mittels eines zweiten Busses kommunikativ verbunden ist.

Desweiteren wird ein Computerprogrammprodukt mit Programmbefehlen zur Durchführung des genannten erfindungsgemäßen Verfahrens beansprucht.

Zusätzlich wird eine Variante des Computerprogrammproduktes mit Programmbefehlen zur Konfiguration eines Erstellungsgeräts, beispielsweise ein 3D-Drucker oder ein ähnliches Gerät, beansprucht, wobei das Erstellungsgerät mit den Programmbefehlen derart konfiguriert wird, dass die genannte erfindungsgemäße Vorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in einem System eingelesen und führt die Programmbefehle aus, sodass das erfindungsgemäße Verfahren auf einem Computer zur Ausführung gebracht wird oder das Erstellungsgerät derart konfiguriert, dass dieses die erfindungsgemäße Vorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:

Fig. 1    ein Ablaufdiagramm eines ersten Ausführungsbeispiels des offenbarten Verfahrens;

Fig. 2    ein zu überprüfender Komponentenfehlerbaum eines zweiten Ausführungsbeispiels;

Fig. 3    ein zu überprüfender Teilbereichs des Komponentenfehlerbaums des zweiten Ausführungsbeispiels;

Fig. 4    eine Vorrichtung zum Überprüfen eines Komponentenfehlerbaumes; und

Fig. 5    ein System zum Überprüfen eines Komponentenfehlerbaumes.

In den Figuren sind funktionsgleiche Elemente mit denselben Bezugszeichen versehen, sofern nichts anderes angegeben ist.

Die nachfolgenden Erläuterungen beziehen sich dabei auf sämtliche Ausführungsbeispiele.

Ein Komponentenfehlerbaum für eine Fehlerbaumanalyse eines technischen Systems kann beispielsweise als boolescher Baum, binärer Entscheidungsbaum oder als gerichteter, azyklischer Graph implementiert sein. Ein Komponentenfehlerbaum hat die gleiche Aussagekraft wie ein klassischer Fehlerbaum, so wie dieser aus dem Stand der Technik bekannt ist, und kann deshalb dazu verwendet werden, eine Aussage über die Sicherheit eines (technischen) Systems zu treffen und Fehler im Systemdesign aufzuzeigen.

Ein Komponentenfehlerbaum umfasst Komponentenfehlerbaumelemente, auch als Komponenten des Komponentenfehlerbaums bezeichnet, die sich jeweils auf Komponenten eines technischen Systems beziehen.

Fehler die an einem Ausgang, beispielsweise einer seriellen Schnittstelle, einer Komponente beobachtet werden können, werden in einem Komponentenfehlerbaum als Ausgangsfehlermodi (engl. Output Failure Modes), nachfolgend auch Fehlerzustände genannt, modelliert. Diese Ausgangsfehlermodi beziehen sich jeweils auf einen bestimmten Ausgang der Komponente. Um zu modellieren wie bestimmte Fehler, beispielsweise vorgegebene Störsignale, sich von einem Eingang, beispielsweise einer seriellen Schnittstelle, einer Komponente bis zum Ausgang fortpflanzen und/oder auswirken, werden Eingabefehlermodi (engl. Input Failure Modes), nachfolgend auch vorgegebene Störungen oder Fehler genannt, verwendet. Das interne Fehlerverhalten einer Komponente, das ebenfalls die Ausgangsfehlermodi beeinflusst, wird mittels AND und OR Gattern und elementarer Ereignisse (engl. Basic Events) modelliert.

Eine Fehlereffektsimulation besteht üblicherweise aus einem Prüfling (engl. Device Under Testing, DUT), der analysiert und bewertet wird. Der Prüfling ist beispielsweise ein virtueller Prototyp eines technischen Systems, für das eine Fehlerbaumanalyse durchgeführt werden soll. Der virtuelle Prototyp kann dabei virtuelle und/oder reelle Elemente des technischen Systems, beispielsweise Software-, Hardware und/oder Analogelemente (Ventile, Hydraulikelemente oder Antriebselemente), umfassen. Der virtuelle Prototyp kann mittels einer Hardwarebeschreibungssprache, beispielsweise VHDL (Very High Speed Integrated Circuit Hardware Description Language), erzeugt werden.

Die Fehlereffektsimulation verwendet üblicherweise einen Fehlerinjektor, um den Prüfling mit Eingaben, beispielsweise Fehler in Form von Fehlersignalen, zu stimulieren und dabei Abweichungen vom erwarteten Verhalten und dem gemessenen oder beobachteten Verhalten zu erfassen. Wenn beispielsweise ein Fehler an eine Komponente des Prüflings übertragen wird, kann der Prüfling sich entweder weiter entsprechend seiner Spezifikation verhalten, beispielsweise aufgrund von implementierten Fehlertoleranztechniken in Form von Signalfiltern, oder der Fehler bzw. das Fehlersignal versetzt den Prüfling in einen Fehlerzustand, beispielsweise das Betriebssystem stürzt ab. Wenn jedoch zu viele Fehler auftreten, kann es aber auch vorkommen, dass die Fehlertoleranztechniken die auftretenden Fehler nicht mehr kompensieren können. Auch das kann dazu führen, dass der Prüfling oder die Komponenten des Prüflings sich zu bestimmten Zeitpunkten nicht entsprechend der Spezifikation verhalten, also ein Fehlverhalten oder Fehlerzustand auftritt. Liegt ein Fehlverhalten oder ein Fehlerzustand vor, so ist allgemein gesprochen ein Stimulationsfehler aufgetreten. Die Fehlereffektsimulation muss in der Lage sein, diese Stimulationsfehler beispielsweise über Überwachungseinrichtungen an den (Daten)Ausgängen und/oder Schnittstellen innerhalb der Komponenten des Prüflings, der Komponenten des Prüflings und/oder des Prüflings selbst zu erfassen.

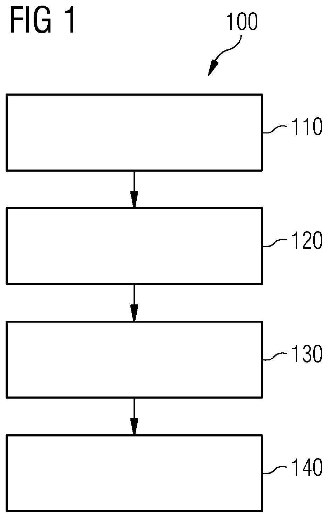

Fig. 1 ist ein Ablaufdiagramm eines ersten Ausführungsbeispiels des offenbarten Verfahrens.

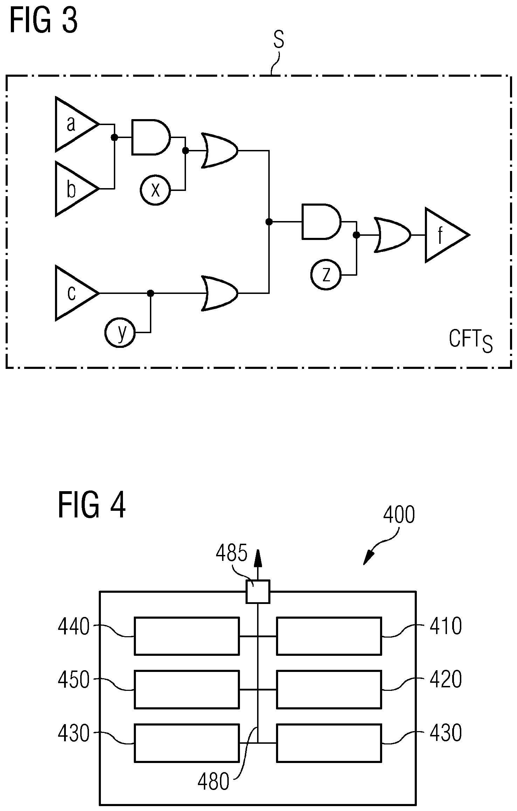

Im Einzelnen zeigt Fig. 1 ein Ablaufdiagramm für ein Verfahren 100 zum rechnergestützten Überprüfen eines Komponentenfehlerbaumes für ein technisches System. Das Verfahren 100 wird vorzugsweise auf einem Rechnersystem, beispielsweise einem IBM-kompatiblen Computer, oder einem Gerät, wie es beispielsweise in Fig.4 beschreiben ist, ausgeführt. Die einzelnen Verfahrensschritte werden vorzugsweise von einem Prozessor, beispielsweise einem x86 kompatiblen Prozessor, ausgeführt.

In einem ersten Verfahrensschritt 110 wird zunächst eine Fehlereffektsimulation für das technische System unter Verwendung des Komponentenfehlerbaumes ausgeführt. Die Fehlereffektsimulation wird beispielsweise anhand derselben Spezifikation erstellt, anhand derer auch der Komponentenfehlerbaum erstellt wurde.

Der Komponentenfehlerbaum umfasst dabei Fehlerzustände für Komponenten des technischen Systems, die durch vorgegebene Störungen an den Komponenten erzeugt werden. Die vorgegebenen Störungen sind insbesondere den Fehlerzuständen, die sie erzeugen, fest zugeordnet.

In einem zweiten Verfahrensschritt 120 wird die Fehlereffektsimulation mit den vorgegebenen Störungen in Form von Fehlersignalen an die Komponenten des technischen Systems übertragen. Dieses Übertragen oder Injizieren von Fehlersignalen an die Komponenten des technischen Systems wird über Schnittstellen an den Komponenten erreicht, um die Komponente oder Elemente, die die Komponente umfassen, mit den im Komponentenfehlerbaum spezifizierten vorgegebenen Störungen, auch Fehler genannt, zu stimulieren.

In einem dritten Verfahrensschritt 130 wird das Ergebnis einer Stimulation einer Komponente aufgezeichnet. Im Einzelnen werden die Stimulationsfehler, die durch die Fehlersignale erzeugt wurden, erfasst.

In einem vierten Verfahrensschritt 140 wird der Komponentenfehlerbaum durch ein Vergleichen der Stimulationsfehler mit den Fehlerzuständen überprüft. Stimmen die Stimulationsfehler mit den Fehlerzuständen im Wesentlichen überein, wird ein erstes Steuersignal bereitgestellt, das die Korrektheit des Fehlerbaumes angibt. Das erste Steuersignal kann beispielsweise einen Prüfbericht umfassen, der an einen Drucker zum Ausdrucken oder an einen Bildschirm zur Anzeige übertragen wird. Es ist aber auch denkbar, dass das technische System, beispielsweise in Form eines Prüflings, auf einem speziellen Analyseprüfstand weiteren Messungen unterzogen wird, falls die Überprüfung fehlgeschlagen ist. Diese fehlgeschlagene Überprüfung des Komponentenfehlerbaumes kann beispielsweise durch ein zweites Steuersignal angezeigt werden.

In einer Variante des Verfahrens 100 läuft die Überprüfung automatisch ab, ohne dass ein Techniker eingreifen muss.

In einer weiteren Variante des Verfahrens 100 läuft die Überprüfung semiautomatisch ab, sodass ein Techniker die einzelnen Komponenten separat testen kann und die Komponenten des Fehlerbaumes Schritt für Schritt überprüft.

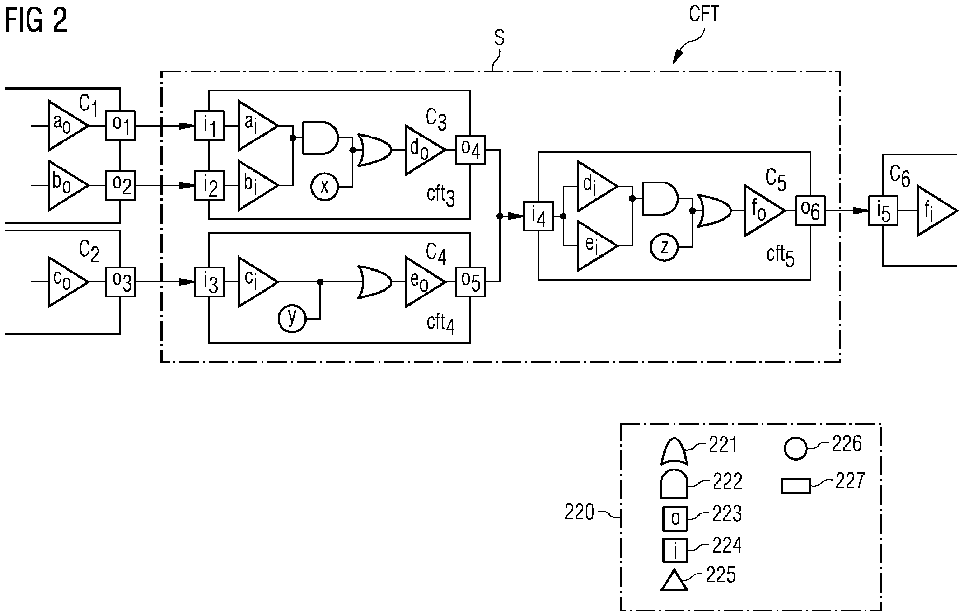

Die Fig. 2 zeigt einen Ausschnitt eines zu überprüfenden Komponentenfehlerbaums CFT mit einem Teilbereich S eines zweiten Ausführungsbeispiels, wobei für die Überprüfung das in Fig. 1 offenbarte Verfahren verwendet wird. Zusätzlich zeigt Fig. 2 eine Legende 220 mit Symbolen für ein OR-Gatter 221, ein AND-Gatter 222, einen Ausgang einer Komponente 223, einen Eingang einer Komponente 224, einen Eingangs- oder Ausgangsfehlermodus 225, ein elementares Ereignis 226 und ein höchstes Ereignis 227 (engl. Top Event).

Der Komponentenfehlerbaum CFT beschreibt Komponenten eines technischen Systems und zwar eine erste Komponente $c_1$, eine zweite Komponente $c_2$, eine dritte Komponente $c_3$, eine vierte Komponente $c_4$, eine fünfte Komponente $c_5$ und eine sechste Komponente $c_6$, wobei die dritte Komponente $c_3$, die vierte Komponente $c_4$ und fünfte Komponente $c_5$ in dem Teilbereich S liegen.

Für jede Komponente ist ein zugehöriger Komponentenfehlerteilbaum dargestellt. Ein erster Komponentenfehlerteilbaum der ersten Komponente $c_1$, ein zweiter Komponentenfehlerteilbaum der zweiten Komponente $c_2$, ein dritter Komponentenfehlerteilbaum $cft_3$ der dritten Komponente $c_3$, ein vierter Komponentenfehlerteilbaum $cft_4$ der vierten Komponente $c_4$, ein fünfter Komponentenfehlerteilbaum $cft_5$ der fünften Komponente $c_5$ und ein sechster Komponentenfehlerteilbaum der sechsten Komponente $c_6$, wobei der dritte Komponentenfehlerteilbaum $cft_3$, der vierte Komponentenfehlerteilbaum $cft_4$ und der fünfte Komponentenfehlerteilbaum $cft_5$ in dem Teilbereich S liegen.

Dabei sind die Komponentenfehlerteilbäume aus Sicht der Komponenten jeweils ein Komponentenfehlerbaum für die jeweilige Komponente selbst. Die Komponentenfehlerteilbäume bilden zusammen den Komponentenfehlerbaum CFT des technischen Systems.

Zusätzlich umfassen die Komponentenfehlerteilbäume damit auch die Komponenten, mehrere Ausgangsfehlermodi, Eingangsfehlermodi, Eingänge und Ausgänge, wie nachfolgend beschrieben. Die Ausgangsfehlermodi, Eingangsfehlermodi, Eingänge und Ausgänge sind beispielsweise Dateneingänge, Datenausgänge und/oder Schnittstellen der jeweiligen Komponenten.

Der erste Komponentenfehlerteilbaum umfasst einen ersten Ausgangsfehlermodus $a_o$, der mit einem ersten Ausgang $o_1$ verbunden ist, und einen zweiten Ausgangsfehlermodus $b_o$, der mit einem zweiten Ausgang $o_2$ verbunden ist.

Der zweite Komponentenfehlerteilbaum umfasst einen dritten Ausgangsfehlermodus $c_o$, der mit einem dritten Ausgang $o_3$ verbunden ist.

Der dritte Komponentenfehlerteilbaum $cft_3$ umfasst einen ersten Eingang $i_1$, der mit einem ersten Eingangsfehlermodus $a_i$ verbunden ist, einen zweiten Eingang $i_2$, der mit einem zweiten Eingangsfehlermodus $b_i$ verbunden ist, und einen vierten Ausgangsfehlermodus $d_o$, der mit einem vierten Ausgang $o_4$ verbunden ist. Der erste Ausgang $o_1$ ist dabei mit dem ersten Eingang $i_1$ verbunden und der zweite Ausgang $o_2$ ist mit dem zweiten Eingang $i_2$ verbunden. Zusätzlich umfasst der dritte Komponentenfehlerteilbaum $cft_3$ ein erstes Komponentenelement (oder nur Element) x, beispielsweise einen Signalgenerator.

Der vierte Komponentenfehlerteilbaum $cft_4$ umfasst einen dritten Eingang $i_3$, der mit einem dritten Eingangsfehlermodus $c_i$ verbunden ist, und einen fünften Ausgangsfehlermodus $e_o$, der mit einem fünften Ausgang $o_5$ verbunden ist. Der dritte Ausgang $o_3$ ist dabei mit dem dritten Eingang $i_3$ verbunden. Zusätzlich umfasst der vierte Komponenten-

fehlerteilbaum $cft_4$ ein zweites Komponentenelement (oder nur Element) y, beispielsweise einen Analog-/Digitalwandler.

Der fünfte Komponentenfehlerteilbaum $cft_5$ umfasst einen vierten Eingang $i_4$, der mit einem vierten Eingangsfehlermodus $d_i$ einem fünften Eingangsfehlermodus $e_i$ verbunden ist, und einen sechsten Ausgangsfehlermodus $f_o$, der mit einem sechsten Ausgang $o_6$ verbunden ist. Der vierte Ausgang $o_4$ und der fünfte Ausgang $o_5$ sind dabei mit dem vierten Eingang $i_4$ verbunden. Zusätzlich umfasst der fünfte Komponentenfehlerteilbaum $cft_5$ ein drittes Komponentenelement (oder nur Element) z, beispielsweise einen hydraulisch gesteuerten Greifarm.

Der sechste Komponentenfehlerteilbaum umfasst einen fünften Eingang $i_5$, der mit einem sechsten Eingangsfehlermodus $f_i$ verbunden ist. Der sechste Ausgang $o_6$ ist dabei mit dem fünften Eingang $i_5$ verbunden.

Um den Komponentenfehlerbaum zu überprüfen, werden zunächst Testfälle anhand des Komponentenfehlerbaumes CFT erzeugt. Die Testfälle mit ihren Eingabedaten und Ausgabedaten werden verwendet, um Fehlersignale für die einzelnen Komponenten des Komponentenfehlerbaumes CFT zu erzeugen. Die Fehlersignale werden dann, beispielsweise über die Eingänge oder über Schnittstellen, vorzugsweise in Form der Eingangsfehlermodi, an die Komponenten übertragen.

Mittels Erfassungseinrichtungen werden die Stimulationsfehler beispielsweise an den Ausgängen der Komponenten oder an Schnittstellen der Komponenten vorzugsweise in Form von Ausgabefehlermodi erfasst. Anschließend wird überprüft, ob die spezifizierten Fehlerzustände mit den vorgegebenen Störungen, die diese erzeugen, den Stimulationsfehlern, die durch Fehlersignale erzeugt wurden, entsprechen. Die Fehlersignale sind dabei entsprechend der Definition der vorgegebenen Störungen erzeugt worden. Entsprechen die Stimulationsfehler im Wesentlichen, also inhaltlich entsprechend der Spezifikation, den Fehlerzuständen im Komponentenfehlerbaum CFT, so wird der Komponentenfehlerbaum CFT als korrekt angesehen.

Nachfolgend wird formal dargestellt, wie eine solche Überprüfung durchgeführt werden kann.

Das technische System SYS besteht aus den Komponenten C = $\{c_1, \ldots, c_n\}$. Jede Komponente $c_i \in C$ umfasst einen Satz an Eingängen IN($c_i$) = $\{i_1, \ldots, i_p\}$ und einen Satz von Ausgängen OUT($c_i$) = $\{o_1, \ldots, o_q\}$. Der Informationsfluss zwischen einem Ausgang einer Komponente $c_i \in C$ und dem Eingang einer anderen Komponente $c_j \in C$ (mit $c_i \neq c_j$) ist durch eine Menge von Verbindungen dargestellt:

$$\text{CON} = \{(o_x, i_y) | o_x \in \text{OUT}(c_1), i_y \in \text{IN}(c_j)\}$$

Das technische System SYS, das durch den Komponentenfehlerbaum aus Fig. 2 beschrieben wird, lässt sich damit wie folgt definieren:

$$C = \{c_1, c_2, c_3, c_4, c_5, c_6\}$$

$$\text{OUT}(c_1) = \{o_1, o_2\}$$

$$\text{OUT}(c_2) = \{o_3\}$$

$$\text{OUT}(c_3) = \{o_4\}$$

$$\text{OUT}(c_4) = \{o_5\}$$

$$\text{OUT}(c_5) = \{o_5\}$$

$$\text{IN}(c_3) = \{i_1, i_2\}$$

$$\text{IN}(c_4) = \{i_3\}$$

$$\text{IN}(c_5) = \{i_4\}$$

$$IN(c_6) = \{i_5\}$$

$$CON = \{(o_1, i_1), (o_2, i_2), (o_3, i_3), (o_4, i_4), (o_5, i_4),$$
$$(o_6, i_5)\}$$

Wenn $c_i \in C$ ein Komponentenfehlerteilbaum $cft_i \in CFT$ hat, dann ist $CFT(c_i) = cft_i$ mit $cft_i \neq O$.

Jeder Komponentenfehlerteilbaum $cft_i \in CFT(c_i)$ einer Komponente $c_i \in C$ kann Eingabefehlermodi $IFM(i_k) = (a_i, ..., z_i)$ umfassen, welche mit einem Eingang $i_k \in IN(c_i)$ verbunden sind. Zusätzlich kann der Komponentenfehlerteilbaum $cft_i \in CFT(c_i)$ einer Komponente $c_i \in C$ Ausgabefehlermodi $OFM(o_l) = (a_o, ..., z_o)$ umfassen, welche mit einem Ausgang $o_l \in OUT(c_i)$ verbunden sind. Zusätzlich kann ein Komponentenfehlerteilbaum $cft_i$ elementare Ereignisse aufweisen $B(cft_i) = (b_1, ..., b_r)$.

Bezogen auf das in Fig. 2 dargestellte Beispiel lassen sich der dritte Komponentenfehlerteilbaum $cft_3$ für die dritte Komponenten $c_3$, der vierte Komponentenfehlerteilbaum $cft_4$ für die vierte Komponenten $c_4$ und der fünfte Komponentenfehlerteilbaum $cft_5$ für die fünfte Komponenten $c_5$ wie folgt darstellen:

$$CFT(c_3) = cft_3$$

$$CFT(c_4) = cft_4$$

$$CFT(c_5) = cft_5$$

$$OFM(o_1) = \{a_o\}$$

$$IFM(i_1) = \{a_i\}$$

$$OFM(o_2) = \{b_o\}$$

$$IFM(i_2) = \{b_i\}$$

$$OFM(o_3) = \{c_o\}$$

$$IFM(i_3) = \{c_i\}$$

$$OFM(o_4) = \{d_o\}$$

$$IFM(i_4) = \{d_i, e_i\}$$

$$OFM(o_5) = \{e_o\}$$

$$IFM(i_5) = \{f_i\}$$

$$OFM(o_6) = \{f_o\}$$

$$OFM(o_6) = \{f_o\}$$

$$B(X) = \{x\}$$

$$B(Y) = \{y\}$$

$$B(Z) = \{z\}$$

Wobei die elementaren Ereignisse von Komponentenelementen, beispielsweise Software, Hardware und/oder analogen Elementen, erzeugt werden.

Um das in dem Komponentenfehlerbaum spezifizierte Fehlerverhalten für das technische System zu überprüfen, werden die Fehlersignale für die definierten Störungen in eine Fehlereffektsimulation eingebracht, um das Verhalten der Komponenten des technischen Systems zu untersuchen. Um das Verhalten der Komponenten zu untersuchen, werden Erfassungseinrichtungen beispielsweise mit den Ausgängen der Komponenten verbunden, um die Stimulationsfehler zu erfassen. Ein Testorakel (engl. test oracle) stellt dann fest, ob sich die Komponente entsprechend dem Komponentenfehlerbaum, also entsprechend der Spezifikation, verhalten hat. Aus diesem Grund werden, wie oben erwähnt, die Fehlersignale als Testfälle für die Fehlereffektsimulation anhand der vordefinierten Störungen und den zugeordneten Fehlerzuständen definiert.

Es kann auch nur ein Teilbereich S des Komponentenfehlerbaumes CFT betrachtet werden $S \subseteq CFT$. Damit ist es möglich, vorgegebene Störungen oder Fehlerzustände für den gesamten Komponentenfehlerbaum CFT oder für den Teilbereich S zu betrachten. Der Teilbereich S kann dabei frei auf dem Komponentenfehlerbaum gewählt werden und kann auch nur eine einzige Komponente bzw. einen einzigen Komponentenfehlerteilbaum umfassen.

Beispielsweise kann hierbei ein bestimmtes Subsystem, beispielsweise ein Softwaresubsystem oder ein Sensorsubsystem, betrachtet werden. Ein Teilbereich $S \subseteq CFT$ verfügt über einen oder mehrere Eingänge und/oder Ausgänge, welche für die Testfälle, oder anders gesagt zum Überprüfen des Teilbereichs des Komponentenfehlerbaumes, verwendet wird.

Die Eingänge des Teilbereichs $IN_S \subseteq \cup_{c_i \in S} IN(c_i)$ werden verwendet, um das Testszenario für den Teilbereich S zu betreiben. Die Ausgänge des Teilbereichs $OUT_S \subseteq \cup_{c_i \in S} OUT(c_i)$ werden von einer Erfassungseinrichtung überwacht und Ausgabedaten beispielsweise an das Testorakel zu Auswertung und Prüfung des Testszenarios übermittelt.

Für das genannte Beispiel kann der Teilbereich wie folgt formal definiert werden:

$$S = \{c_3, c_4, c_5\}$$

$$IN_S = \{i_1, i_2, i_3\}$$

$$OUT_S = \{o_6\}$$

Der innere Komponentenfehlerbaum des Teilbereichs S kann dann, wie in Fig. 3 dargestellt, vereinfacht werden. Dieser innere Komponentenfehlerbaum umfasst dann nur noch elementare Ereignisse, AND-Gatter, OR-Gatter, Eingabefehlermodi und Ausgabefehlermodi, die für den betrachteten Teilbereich von Relevanz sind.

Damit gilt für den Teilbereich $S \subseteq CFT$, wobei Komponentenfehlerteilbäume, die der Teilbereich S umfasst, wie folgt definiert sind $CFT_S \subseteq CFT$. Der Teilbereich S weist die Eingabefehlermodi und die Ausgabefehlermodi auf, die sich auf Eingänge und Ausgänge der Komponenten beziehen, die eine Verbindung nach draußen, also außerhalb des Teilbereichs S, haben.

Die Eingabefehlermodi des Teilbereichs S lassen sich wie folgt formal darstellen:

$$IFM(S) = \{i \mid \exists (a, b) \in CON,$$

$a \in OUT(a), a \notin S,$
$b \in IN(b), b_i \in S,$

i ∈ IFM(b)}

Die Ausgabefehlermodi des Teilbereichs S lassen sich wie folgt formal darstellen:

$$OFM(S) = \{o \mid \exists (a, b) \in CON,$$

a ∈ OUT(a), a ∈ S,
b ∈ IN(b), b E S,
o ∈ OFM(a)}

Die elementaren Ereignisse des Teilbereichs S lassen sich wie folgt formal darstellen:

$$B(S) = \bigcup_{c_i \in S} B(c_i)$$

Die Eingabefehlermodi und die Ausgabefehlermodi sind dann wie folgt definiert:

$$IFM(S) = a, b, c$$

$$OFM(S) = f$$

$$B(S) = x, y, z$$

Um die Testfälle für den Teilbereich S zu ermitteln, wird eine Minimalschnittanalyse (engl. Mimimal Cut Set Analysis, MCA) verwendet. Eine Minimalschnittanalyse ist eine Darstellung eines Baumes, die eine Disjunktion von konjunktiven Termen verwendet, die nicht weiter vereinfacht werden können.
Für den Teilbereich S sind

$$mc_i(t) = x_1 \wedge \ldots \wedge x_n,$$

$$t \in OFM(S),$$

$$x_i \in IFM(S) \cup B(S)$$

alle Minimalschnitte mc, die sich aus in einem Auftreten des Ausgabefehlermodus $t \in OFM(S)$ des Teilbereichs $S \subseteq CFT$ ergeben. Zusätzlich ist

$$MCA(t) = mc_1(t) \vee \ldots \vee mc_m(t), \quad t \in OFM(S)$$

die Minimalschnittanalyse des Ausgabefehlermodus t des Teilbereichs $S \subseteq CFT$.
Die Minimalschnittanalyse für den Ausgabefehlermodus f aus der Fig. 3 lässt sich wie folgt darstellen:

$$MCA(f) = (a \wedge b \wedge c) \vee (x \wedge c) \vee (a \wedge b \wedge y) \vee (x \wedge y) \vee (z)$$

Daraus ergeben sich insgesamt fünf Schnittmengen:

$$(a \wedge b \wedge c) \Leftrightarrow f$$

$$(x \wedge c) \iff f$$

$$(a \wedge b \wedge y) \iff f$$

$$(x \wedge y) \iff f$$

$$(z) \iff f$$

Da im Allgemeinen unterschiedliche Kombinationen von Eingangsdaten, beispielsweise in Form von Fehlersignalen, zu unterschiedlichen Ausgangsdaten des Teilbereichs S, beispielsweise Stimulationsfehlern, für den selben Testfall führen, können übliche Verfahren, beispielsweise Äquivalenzklassentests (engl. equivalence dass testing), verwendet werden, um die Anzahl der Testfälle zu reduzieren.

Folglich wird das Ergebnis der Minimalschnittanalyse dazu verwendet, die nötigen Fehlersignale zu bestimmen, die an die Komponenten oder den Teilbereich S in der Fehlereffektsimulation übertragen werden.

Die Eingaben die sich aus dem Eingabefehlermodi IFM(S) ergeben, werden beispielsweise durch Fehlersignale in der Form von sich ändernden Signalen, sich ändernden Parametern oder sich ändernden Werten an den Eingängen der entsprechenden Komponenten des Teilbereichs erzeugt. Ein Fehlersignal kann beispielsweise ein Datensignal sein, das eine zu hohe Amplitude aufweist. Ein Fehlersignal kann auch spezifische elementare Ereignisse B(S) von Komponentenelementen, beispielsweise Software, Hardware oder analogen Elementen, erzeugen, indem der Zustand des Modells, das die entsprechenden Komponentenelemente darstellt, verändert wird. Hierzu werden die Fehlersignale, also Signale, die vorgegebene Störungen oder Fehler im technischen System erzeugen, an die Fehlereffektsimulation übertragen, dieses Übertragen von Fehlersignalen an die Fehlereffektsimulation wird auch als ein Injizieren bezeichnet.

Das Übertragen von Fehlersignalen stimuliert das technische System, beispielsweise einen Prüfling, und führt zu Abweichungen des Verhaltens des technischen Systems. Hierunter ist beispielsweise zu verstehen, dass sich das technische System ohne die Übertragung von Fehlersignalen ein gewünschtes Verhalten eines Normalbetriebs an den Tag legt. Die Fehlersignale können zu einer Abweichung von dem gewünschten Verhalten im Normalbetrieb führen.

Dadurch, dass die Ausgangsfehlermodi des Teilbereichs OFM(S) an den Ausgängen o des Teilbereichs S gemessen werden können, werden Erfassungseinrichtungen, beispielsweise in Form von Monitoren (engl. monitors), innerhalb der Fehlereffektsimulation erzeugt. Diese Erfassungseinrichtungen können beispielsweise direkt oder indirekt überprüfen, ob ein übertragenes Fehlersignal zu dem erwarteten Stimulationsfehler entsprechend den Fehlerzuständen des Komponentenfehlerbauems CFT führt. Unter "direkt" ist zu verstehen, dass die Erfassungseinrichtung diese Prüfung selbst vornimmt. Unter "indirekt" ist zu verstehen, dass die Fassungseinrichtung die erfassten Informationen weiterleitet, sodass diese von einer anderen Komponente, beispielsweise einem Prüfstand oder Prüfberichtwerkzeug, ausgewertet werden können.

Fig. 4 zeigt eine Vorrichtung zum rechnergestützten Überprüfen eines Komponentenfehlerbaumes eines technischen Systems. Die Vorrichtung weist einen Prozessor 410, eine Ausführungseinheit 420, eine Stimulationseinheit 430, eine Erfassungseinheit 440, Überprüfungseinheit 450, eine Bereitstellungseinheit 460 und eine Schnittstelle 485, die über einen ersten Bus 480 kommunikativ miteinander verbunden sind.

Die Ausführungseinheit 420 führt eine Fehlereffektsimulation für das technische System unter Verwendung des Komponentenfehlerbaumes aus, wobei der Komponentenfehlerbaum Fehlerzustände für Komponenten des technischen Systems umfasst, die durch vorgegebene Störungen an den Komponenten erzeugt werden. Dabei sind die vorgegebenen Störungen den Fehlerzuständen vorzugsweise direkt zugeordnet.

Die Stimulationseinheit 430 stimuliert die Fehlereffektsimulation mit den vorgegebenen Störungen, wobei die vorgegebenen Störungen als Fehlersignale an die Komponenten übertragen werden.

Die Erfassungseinheit 440 erfasst Stimulationsfehler, die durch das Stimulieren der Fehlereffektsimulation erzeugt werden.

Die Überprüfungseinheit 450 überprüft den Komponentenfehlerbaum durch ein Vergleichen der Stimulationsfehler mit den Fehlerzuständen.

Die Bereitstellungseinheit 460 stellt ein Steuersignal, vorzugsweise über die Schnittstelle 485, bereit, das die Korrektheit des Komponentenfehlerbaumes angibt, wenn die Stimulationsfehler mit den Fehlerzuständen im Wesentlichen übereinstimmen.

Die Schnittstelle 485 dient der Anbindung der Vorrichtung 400 an ein Computersystem und/oder einem Prüfstand. Die Schnittstelle 485 kann beispielsweise eine USB-Schnittstelle oder eine Ethernetschnittstelle sein.

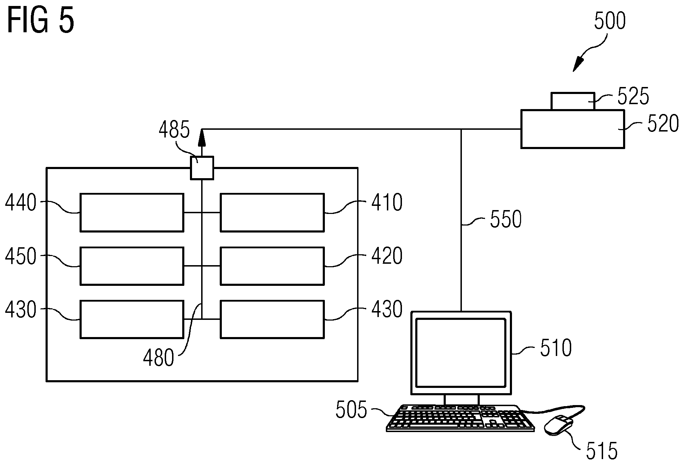

Eine solche Anbindung wird beispielsweise in Fig. 5 gezeigt. Im Einzelnen zeigt Fig. 5 ein System 500, beispielsweise einen Prüfstand, zum Überprüfen eines Komponentenfehlerbaumes.

Ein Computersystem, beispielsweise ein IBM-kompatibles Computersystem, umfassend ein Anzeigegerät 510, beispielsweise einen Bildschirm, und mehrere Eingabegeräte, beispielsweise eine Computermaus 515 und eine Tastatur 505, ist über einen zweiten Bus 550 und der Schnittstelle 485 mit der Vorrichtung 400 kommunikativ verbunden. Der zweite Bus 550 kann beispielsweise ein Ethernetbus oder ein Universal Serial Bus (USB) sein.

Zusätzlich ist die Vorrichtung 400 vorzugsweise über den zweiten Bus 550 mit einem Prüfstand 520 verbunden. Mit dem Prüfstand 520 ist ein technisches System 525, beispielsweise ein Prüfling, verbunden. Der Prüfstand 520 und das technische System 525 werden vorzugsweise zum Ausführen der Fehlereffektsimulation verwendet.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.

## Patentansprüche

1. Verfahren (100) zum rechnergestützten Überprüfen eines Komponentenfehlerbaumes (CFT) für ein technisches System (525) **dadurch gekennzeichnet, dass** ein Prozessor (410) die folgende Verfahrensschritte ausführt:

   - Ausführen (110) einer Fehlereffektsimulation für einen virtuellen Prototyp des technischen Systems (525), wobei die Fehlereffektsimulation anhand der Spezifikation des Komponentenfehlerbaumes (CFT) des Systems (525) erstellt ist, wobei

      - die Spezifikation des Komponentenfehlerbaum (CFT) Fehlerzustände für Komponenten ($c_1$, $c_2$, $c_3$, $c_4$, $c_5$, $c_6$) des technischen Systems (525) umfasst, die durch vorgegebene Störungen an den Komponenten ($c_1$, $c_2$, $c_3$, $c_4$, $c_5$, $c_6$) erzeugt werden;
      - die vorgegebenen Störungen den Fehlerzuständen zugeordnet sind;

   - Stimulieren (120) der Fehlereffektsimulation mit den vorgegebenen Störungen, wobei die vorgegebenen Störungen als Fehlersignale an die Komponenten ($c_1$, $c_2$, $c_3$, $c_4$, $c_3$, $c_6$) übertragen werden;
   - Erfassen (130) von Stimulationsfehlern, die durch das Stimulieren der Fehlereffektsimulation erzeugt werden, wobei Stimulationsfehler eine Abweichung vom erwarteten Verhalten des Systems sind; und
   - Überprüfen (140) des Komponentenfehlerbaumes (CFT) durch ein Vergleichen der Stimulationsfehler mit den Fehlerzuständen, wobei ein erstes Steuersignal bereitgestellt wird, das die Korrektheit des Komponentenfehlerbaumes (CFT) angibt, wenn die Stimulationsfehler mit den Fehlerzuständen übereinstimmen.

2. Verfahren (100) nach einem der vorhergehenden Ansprüche, wobei das technische System (525) ein Prüfling ist.

3. Verfahren (100) nach einem der vorhergehenden Ansprüche, wobei

   - ein Teilbereich (S) des Komponentenfehlerbaumes (CFT) ermittelt wird;
   - das Überprüfen des Komponentenfehlerbaumes (CFT) nur für die Komponenten ($c_3$, $c_4$, $c_5$) durchgeführt wird, die in den Teilbereich (S) fallen.

4. Verfahren (100) nach einem der vorhergehenden Ansprüche, wobei der Komponentenfehlerbaum (CFT) als boolescher Baum oder als binärer Entscheidungsbaum implementiert ist.

5. Verfahren (100) nach einem der vorhergehenden Ansprüche, wobei die Komponenten ($c_1$, $c_2$, $c_3$, $c_4$, $c_5$, $c_6$) Komponentenelemente (x, y, z) in Form von Software und/oder Hardware und/oder analogen Elementen umfassen, wobei analoge Elemente insbesondere mechanische oder hydraulische Elemente sind.

6. Verfahren (100) nach einem der vorhergehenden Ansprüche, wobei die Stimulationsfehler mittels Erfassungseinrichtungen an Datenausgängen ($o_1$, $o_2$, $o_3$, $o_4$, $o_5$, $o_6$) der Komponenten ($c_1$, $c_2$, $c_3$, $c_4$, $c_3$, $c_6$) erfasst werden.

7. Verfahren (100) nach einem der vorhergehenden Ansprüche, wobei das Stimulieren mit den Fehlersignalen über Schnittstellen und/oder Dateneingängen ($i_1$, $i_2$, $i_3$, $i_4$, $i_5$) der Komponenten ($c_1$, $c_2$, $c_3$, $c_4$, $c_3$, $c_6$) des technischen Systems (525) erfolgt.

8. Verfahren (100) nach einem der vorhergehenden Ansprüche, wobei

- das erste Steuersignal bereitgestellt wird, wenn die vorgegebenen Störungen genau die Stimulationsfehler erzeugen, die den Fehlerzuständen entsprechen, die den vorgegebenen Störungen zugeordnet sind; und
- die Stimulationsfehler mit den Fehlerzuständen übereinstimmen.

9. Verfahren (100) nach einem der vorhergehenden Ansprüche, wobei ein zweites Steuersignal bei einer fehlgeschlagenen Überprüfung des Komponentenfehlerbaumes bereitgestellt wird.

10. Vorrichtung (400) zum rechnergestützten Überprüfen eines Komponentenfehlerbaumes (CFT) eines technischen Systems (525) aufweisend:

- mindestens einen Prozessor (410);
- eine Ausführungseinheit (420) zum Ausführen einer Fehlereffektsimulation für einen virtuellen Prototypen des technischen Systems (525), wobei die Fehlereffektsimulation anhand der Spezifikation des Komponentenfehlerbaumes (CFT) erstellt ist, wobei

- die Spezifikation des Komponentenfehlerbaum (CFT) Fehlerzustände für Komponenten ($c_1$, $c_2$, $c_3$, $c_4$, $c_5$, $c_6$) des technischen Systems (525) umfasst, die durch vorgegebene Störungen an den Komponenten ($c_1$, $c_2$, $c_3$, $c_4$, $c_5$, $c_6$) erzeugt werden;
- die vorgegebenen Störungen den Fehlerzuständen zugeordnet sind;

- eine Stimulationseinheit (430) zum Stimulieren der Fehlereffektsimulation mit den vorgegebenen Störungen, wobei die vorgegebenen Störungen als Fehlersignale an die Komponenten ($c_1$, $c_2$, $c_3$, $c_4$, $c_5$, $c_6$) übertragen werden;
- eine Erfassungseinheit (440) zum Erfassen von Stimulationsfehlern, die durch das Stimulieren der Fehlereffektsimulation erzeugt werden, wobei Simulationsfehler eine Abweichung vom erwarteten Verhalten des Systems sind;
- eine Überprüfungseinheit (450) zum Überprüfen des Komponentenfehlerbaumes (CFT) durch ein Vergleichen der Stimulationsfehler mit den Fehlerzuständen,
- eine Bereitstellungseinheit (460) zum Breitstellen eines ersten Steuersignals, das die Korrektheit des Komponentenfehlerbaumes (CFT) angibt, wenn die Stimulationsfehler mit den Fehlerzuständen übereinstimmen.

11. Vorrichtung (400) nach Anspruch 10, wobei das technische System (525) ein Prüfling ist.

12. System (500) zum rechnergestützten Überprüfen eines Komponentenfehlerbaumes (CFT) eines technischen Systems (525), aufweisend:

- eine Vorrichtung (400) nach einem der Ansprüche 10 - 11; und
- einen Prüfstand (520) für das technische System (525), wobei der Prüfstand (520) mit der Vorrichtung (400) mittels eines zweiten Busses (550) kommunikativ verbunden ist.

13. Computerprogrammprodukt mit Programmbefehlen zur Durchführung des Verfahrens nach einem der Ansprüche 1-9.

**Claims**

1. Method (100) for the computer-aided checking of a component fault tree (CFT) for a technical system (525), **characterized in that** a processor (410) performs the following method steps:

- executing (110) a fault effect simulation for a virtual prototype of the technical system (525), wherein the fault effect simulation is created on the basis of the specification of the component fault tree (CFT) of the system (525), wherein

- the specification of the component fault tree (CFT) comprises fault states for components ($c_1$, $c_2$, $c_3$, $c_4$, $c_5$, $c_6$) of the technical system (525) which are generated by predefined disturbances at the components ($c_1$, $c_2$, $c_3$, $c_4$, $c_5$, $c_6$) ;
- the predefined disturbances are assigned to the fault states;

- stimulating (120) the fault effect simulation with the predefined disturbances, wherein the predefined disturbances are transmitted as fault signals to the components ($c_1$, $c_2$, $c_3$, $c_4$, $c_5$, $c_6$) ;
- detecting (130) stimulation faults which are generated by the step of stimulating the fault effect simulation, wherein stimulation faults are a deviation from the expected behaviour of the system; and
- checking (140) the component fault tree (CFT) by comparing the stimulation faults with the fault states, wherein a first control signal is provided, which indicates the correctness of the component fault tree (CFT), if the stimulation faults correspond to the fault states.

2. Method (100) according to any of the preceding claims, wherein the technical system (525) is a device under testing.

3. Method (100) according to either of the preceding claims, wherein

   - a subregion (S) of the component fault tree (CFT) is determined;
   - checking the component fault tree (CFT) is carried out only for the components ($c_3$, $c_4$, $c_5$) which fall within the subregion (S).

4. Method (100) according to any of the preceding claims, wherein the component fault tree (CFT) is implemented as a Boolean tree or as a binary decision tree.

5. Method (100) according to any of the preceding claims, wherein the components ($c_1$, $c_2$, $c_3$, $c_4$, $c_5$, $c_6$) comprise component elements (x, y, z) in the form of software and/or hardware and/or analogue elements, wherein analogue elements are in particular mechanical or hydraulic elements.

6. Method (100) according to any of the preceding claims, wherein the stimulation faults are detected by means of detection devices at data outputs ($o_1$, $o_2$, $o_3$, $o_4$, $o_5$, $o_6$) of the components ($c_1$, $c_2$, $c_3$, $c_4$, $c_5$, $c_6$).

7. Method (100) according to any of the preceding claims, wherein the stimulating with the fault signals is effected via interfaces and/or data inputs ($i_1$, $i_2$, $i_3$, $i_4$, $i_5$) of the components ($c_1$, $c_2$, $c_3$, $c_4$, $c_5$, $c_6$) of the technical system (525) .

8. Method (100) according to any of the preceding claims, wherein

   - the first control signal is provided if the predefined disturbances generate precisely the stimulation faults which correspond to the fault states which are assigned to the predefined disturbances; and
   - the stimulation faults correspond to the fault states.

9. Method (100) according to any of the preceding claims, wherein a second control signal is provided in the case of failed checking of the component fault tree.

10. Device (400) for the computer-aided checking of a component fault tree (CFT) of a technical system (525), comprising:

    - at least one processor (410);
    - an execution unit (420) for executing a fault effect simulation for a virtual prototype of the technical system (525), wherein the fault effect simulation is created on the basis of the specification of the component fault tree (CFT), wherein

      - the specification of the component fault tree (CFT) comprises fault states for components ($c_1$, $c_2$, $c_3$, $c_4$, $c_5$, $c_6$) of the technical system (525) which are generated by predefined disturbances at the components ($c_1$, $c_2$, $c_3$, $c_4$, $c_5$, $c_6$);
      - the predefined disturbances are assigned to the fault states;

    - a stimulation unit (430) for stimulating the fault effect simulation with the predefined disturbances, wherein the predefined disturbances are transmitted as fault signals to the components ($c_1$, $c_2$, $c_3$, $c_4$, $c_5$, $c_6$);
    - a detection unit (440) for detecting stimulation faults which are generated by the step of stimulating the fault effect simulation, wherein stimulation faults are a deviation from the expected behaviour of the system;
    - a checking unit (450) for checking the component fault tree (CFT) by comparing the stimulation faults with the fault states,
    - a providing unit (460) for providing a first control signal, which indicates the correctness of the component fault tree (CFT), if the stimulation faults correspond to the fault states.

**11.** Device (400) according to Claim 10, wherein the technical system (525) is a device under testing.

**12.** System (500) for the computer-aided checking of a component fault tree (CFT) of a technical system (525), comprising:

- a device (400) according to either of Claims 10-11; and
- a test bed (520) for the technical system (525), wherein the test bed (520) is communicatively connected to the device (400) by means of a second bus (550).

**13.** Computer program product comprising program instructions for carrying out the method according to any of Claims 1-9.

**Revendications**

**1.** Procédé (100) destiné à la vérification assistée par ordinateur d'un arbre de défaillances de composant (CFT) pour un système technique (525) **caractérisé en ce qu'**un processeur (410) exécute les étapes de procédé suivantes :

- exécution (110) d'une simulation d'effets de défaillances pour un prototype virtuel du système technique (525), dans lequel la simulation d'effets de défaillances est générée à l'aide de la spécification de l'arbre de défaillances de composant (CFT) du système (525), dans lequel

- la spécification de l'arbre de défaillances de composant (CFT) comprend des états de défaillance pour des composants ($c_1$, $c_2$, $c_3$, $c_4$, $c_5$, $c_6$) du système technique (525), qui sont générés par le biais de perturbations prédéterminées au niveau des composants ($c_1$, $c_2$, $c_3$, $c_4$, $c_5$, $c_6$);
- les perturbations prédéterminées sont associées aux états de défaillances ;

- stimulation (120) de la simulation d'effets de défaillances avec les perturbations prédéterminées, dans lequel les perturbations prédéterminées sont transmises aux composants ($c_1$, $c_2$, $c_3$, $c_4$, $c_5$, $c_6$) en tant que signaux de défaillance ;
- détection (130) d'erreurs de stimulation qui sont générées par le biais de la stimulation de la simulation d'effets de défaillance, dans lequel des défaillances de stimulation sont un écart par rapport au comportement attendu du système ; et
- vérification (140) de l'arbre de défaillances de composant (CFT) par le biais d'une comparaison des défaillances de stimulation avec les états de défaillance, dans lequel un premier signal de commande est mis à disposition, qui indique l'exactitude de l'arbre de défaillances de composant (CFT) lorsque les défaillances de stimulation concordent avec les états de défaillance.

**2.** Procédé (100) selon l'une quelconque des revendications précédentes, dans lequel le système technique (525) est un spécimen.

**3.** Procédé (100) selon l'une quelconque des revendications précédentes, dans lequel

- un secteur (S) de l'arbre de défaillances de composant (CFT) est déterminé ;
- la vérification de l'arbre de défaillances de composant (CFT) n'est réalisée que pour les composants ($c_3$, $c_4$, $c_5$) qui se trouvent dans le secteur (S).

**4.** Procédé (100) selon l'une quelconque des revendications précédentes, dans lequel l'arbre de défaillances de composant (CFT) est mis en œuvre en tant qu'arbre booléen ou en tant qu'arbre décisionnel binaire.

**5.** Procédé (100) selon l'une quelconque des revendications précédentes, dans lequel les composants ($c_1$, $c_2$, $c_3$, $c_4$, $c_5$, $c_6$) comprennent des éléments de composant (x, y, z) sous forme d'éléments logiciels et/ou matériels et/ou analogues, dans lequel des éléments analogues sont en particulier des éléments mécaniques ou hydrauliques.

**6.** Procédé (100) selon l'une quelconque des revendications précédentes, dans lequel les erreurs de stimulation sont détectées au moyen de dispositifs de détection au niveau de sorties de données ($o_1$, $o_2$, $o_3$, $o_4$, $o_5$, $o_6$) des composants ($c_1$, $c_2$, $c_3$, $c_4$, $c_5$, $c_6$).

**7.** Procédé (100) selon l'une quelconque des revendications précédentes, dans lequel la stimulation s'effectue avec les signaux de défaillance via des interfaces et/ou des entrées de données ($i_1$, $i_2$, $i_3$, $i_4$, $i_5$) des composants ($c_1$, $c_2$, $c_3$, $c_4$, $c_5$, $c_6$) du système technique (525).

**8.** Procédé (100) selon l'une quelconque des revendications précédentes, dans lequel

- le premier signal de commande est mis à disposition lorsque les perturbations prédéterminées génèrent exactement les défaillances de stimulation qui correspondent aux états de défaillance qui sont associés aux perturbations prédéterminées ; et
- les défaillances de stimulation coïncident avec les états de défaillance.

**9.** Procédé (100) selon l'une quelconque des revendications précédentes, dans lequel un second signal de commande est mis à disposition lors d'une vérification de l'arbre de défaillances de composant qui a échouée.

**10.** Dispositif (400) destiné à la vérification assistée par ordinateur d'un arbre de défaillances de composant (CFT) d'un système technique (525) présentant :

- au moins un processeur (410) ;
- une unité d'exécution (420) destinée à l'exécution d'une simulation d'effets de défaillance pour un prototype virtuel du système technique (525), dans lequel la simulation d'effets de défaillance est générée à l'aide de la spécification de l'arbre de défaillances de composant (CFT), dans lequel

    - la spécification de l'arbre de défaillances de composant (CFT) comprend des états de défaillance pour des composants ($c_1$, $c_2$, $c_3$, $c_4$, $c_5$, $c_6$) du système technique (525), qui sont générés par le biais de perturbations prédéterminées au niveau des composants ($c_1$, $c_2$, $c_3$, $c_4$, $c_5$, $c_6$);
    - les perturbations prédéterminées sont associées aux états de défaillance ;

- une unité de stimulation (430) destinée à la stimulation de la simulation d'effets de défaillance avec les perturbations prédéterminées, dans lequel les perturbations prédéterminées sont transmises en tant que signaux de défaillance aux composants ($c_1$, $c_2$, $c_3$, $c_4$, $c_5$, $c_6$) ;
- une unité de détection (440) destinée à la détection de défaillances de stimulation qui sont générées par le biais de la stimulation de la simulation d'effets de défaillance, dans lequel des défaillances de simulation sont un écart par rapport au comportement attendu du système ;
- une unité de vérification (450) destinée à la vérification de l'arbre de défaillances de composant (CFT) par le biais d'une comparaison des défaillances de stimulation avec les états de défaillance,
- une unité de mise à disposition (460) destinée à la mise à disposition d'un premier signal de commande qui indique l'exactitude de l'arbre de défaillances de composant (CFT) lorsque les défaillances de stimulation coïncident avec les états de défaillance.

**11.** Procédé (400) selon la revendication 10, dans lequel le système technique (525) est un spécimen.

**12.** Système (500) destiné à la vérification assistée par ordinateur d'un arbre de défaillances de composant (CFT) d'un système technique (525), présentant :

- un dispositif (400) selon l'une quelconque des revendications 10 à 11 ; et
- un banc de vérification (520) pour le système technique (525), dans lequel le banc de vérification (520) est relié au dispositif (400) de manière à pouvoir communiquer au moyen d'un second bus (550).

**13.** Produit de programme informatique avec des instructions de programme destinées à la réalisation du procédé selon l'une quelconque des revendications 1 à 9.

FIG 1

100

110

120

130

140

# FIG 2

EP 3 173 928 B1

FIG 3

FIG 4

FIG 5

**IN DER BESCHREIBUNG AUFGEFÜHRTE DOKUMENTE**

**In der Beschreibung aufgeführte Patentdokumente**

- DE 102007042752 A1
- US 5561762 A

**In der Beschreibung aufgeführte Nicht-Patentliteratur**

- **W. S. LEE.** *Fault Tree Analysis, Methods, and Applications - A Review*
- **NANCY G. LEVESON.** *Software safety: why, what, and how*
- **K. DURGA RAO.** *Dynamic fault tree analysis using Monte Carlo simulation in probabilistic safety assessment*